# EUROPÄISCHE PATENTSCHRIFT

(11) **EP 2 014 402 B1**
(45) Veröffentlichungstag und Bekanntmachung des Hinweises auf die Patenterteilung: **07.09.2011**
(21) Anmeldenummer: 07011625.6
(22) Anmeldetag: 13.06.2007
(51) Int. Cl.: B23K 9/04

(54) **Verfahren zum Abscheiden eines metallischen Substrats auf einer Wandung**
Method for separation of a metal substrate on cladding
Procédé destiné à la séparation d'un substrat métallique sur une paroi

(43) Veröffentlichungstag der Anmeldung: 14.01.2009
(73) Patentinhaber: SIEMENS AKTIENGESELLSCHAFT, 80333 München (DE)
(72) Erfinder: Fajardo-Reina, Scarlett, 40882 Ratingen (DE); Grüger, Birgit, 44329 Dortmund (DE); Gunzelmann, Karl-Heinz, 90491 Nürnberg (DE); Janssen, Wolfgang, Dr., 42579 Heiligenhaus (DE)

(56) Entgegenhaltungen:
- WO-A-2007/017306
- DE-A1- 3 220 242

## Beschreibung

Die Erfindung betrifft ein Verfahren zum Abscheiden eines metallischen Substrats auf einer Wandung einer schmalen Vertiefung eines metallischen Bauteils. Ein solches Verfahren ist in der WO 2007/017306 offenbart.

Metallische Bauteile weisen häufig schmale Vertiefungen beispielsweise in der Form von Nuten auf. Wenn die Wandung einer solchen Nut durch Verschleiß beschädigt wird, ist eine örtlich begrenzte Reparatur kaum möglich. So können insbesondere keine Standardschweißverfahren eingesetzt werden, um ein Schweißgut im Reparaturbereich aufzubringen, da die beengten Platzverhältnisse im engen Spalt der Nut deren Einsatz nicht zulassen. Daher muss zurzeit der Gesamtbereich der zu reparierenden Nut aufgeschweißt und anschließend die Nut wieder neu eingestochen werden. Dies ist aufwändig und teuer.

Um eine Beschädigung der Wandung der schmalen Vertiefung von vornherein zu verhindern, ist es weiterhin wünschenswert, einen Verschleißschutz in diesem Bereich aufzubringen. Dies kann beispielsweise in der Form erfolgen, dass thermisch, chemisch und/oder mechanisch hoch belastbare Metalle auf der Wandung aufgebracht werden. Allerdings sind die im Stand der Technik bekannten Schweißverfahren aus den oben erläuterten Gründen auch hierzu nicht geeignet.

Es ist daher Aufgabe der vorliegenden Erfindung, ein Verfahren der eingangs genannten Art anzugeben, mit dessen Hilfe eine Wandung einer schmalen Vertiefung in einem metallischen Bauteil durch Abscheidung eines metallischen Substrats repariert werden kann. Weiterhin soll es ermöglicht werden, einen Verschleißschutz auf einer Wandung in einer schmalen Vertiefung eines metallischen Bauteils aufzubringen.

Diese Aufgaben werden erfindungsgemäß durch ein Verfahren nach Anspruch 1.

Grundgedanke der Erfindung ist es also, eine Drahtelektrode zunächst in die Vertiefung einzuführen und sie mittels einer Führung in Richtung der Wandung zu biegen, auf der das metallische Substrat abgeschieden werden soll. Dann wird an das Bauteil und an die Drahtelektrode eine geeignete Spannung angelegt, um einen Lichtbogen zu erzeugen. Der Lichtbogen schmilzt die Drahtelektrode bereichsweise auf und das geschmolzene Material der Drahtelektrode wird auf der Wandung des Bauteils abgeschieden. Um den geschmolzenen Bereich der Drahtelektrode zu ersetzen, wird die Drahtelektrode während des Abscheidens des metallischen Substrats in die Vertiefung nachgeführt.

Vorteil des erfindungsgemäßen Verfahrens ist, dass auch auf einer Wandung einer schmalen Vertiefung metallisches Substrat abgeschieden werden kann, wobei die Breite (b) der Vertiefung größer ist als die Breite (s) des erzeugten Substrats auf der Wandung und eine schmalere Vertiefung mit der Breite (b-s) durch Abscheiden des Substrats erzeugt wird. Dabei wird ein ausreichender und reproduzierbarer Flankeneinbrand gewährleistet. Weiterhin ist ein Abscheiden des metallischen Substrats in verschiedensten Positionen, d.h. z.B. an vertikaler und liegender Flanke möglich.

Gemäß einer ersten Ausführungsform ist vorgesehen, dass zumindest die Drahtelektrode im Lichtbogen mit einem Schutzgas umgeben wird. Auf diese Weise wird sichergestellt, dass weder die Wandung noch die Drahtelektrode im Bereich des Lichtbogens in unerwünschter Weise oxidiert werden.

Es ist ebenfalls möglich, eine Drahtelektrode zu verwenden, die aus demselben oder aus einem artähnlichen Metall wie das Bauteil besteht. Dies ist insbesondere vorteilhaft, wenn eine Wandung einer schmalen Vertiefung in einem metallischen Bauteil repariert werden soll. In diesem Fall kann entweder eine Drahtelektrode verwendet werden, die aus demselben Material wie das zu reparierende Bauteil besteht oder die aus einem Material besteht, das artähnlich zu der des Metalls des Bauteils ist. Auf jeden Fall wird sichergestellt, dass das neu auf der Wandung abgeschiedene metallische Substrat in seinen Eigenschaften denen des Metalls des Bauteils ähnelt.

Alternativ kann eine Drahtelektrode aus einem thermisch, chemisch und/oder mechanisch hochbelastbarem Metall verwendet werden. Auf diese Weise kann einfach ein Verschleißschutz auf der Wandung der schmalen Vertiefung aufgebracht werden. Dabei unterscheidet sich das Metall der Drahtelektrode von dem des Bauteils dadurch, dass es insgesamt eine höhere Beständigkeit gegenüber thermischen, chemischen und/oder mechanischen Belastungen aufweist.

Gemäß einer weiteren Ausführungsform der Erfindung ist vorgesehen, einen Massivdraht oder einen Röhrchendraht als Drahtelektrode zu verwenden.

Eine Weiterbildung der Erfindung sieht vor, dass die Drahtelektrode während des Abscheidens des metallischen Substrats in einer Pendelbewegung von der Wand weg und zu dieser hin bewegt wird.

Um die Lage der Drahtelektrode bezüglich der Wandung zu überprüfen und gegebenenfalls zu korrigieren, kann der während der Erzeugung des Lichtbogens auftretende Strom- und/oder Spannungsverlauf mit der Pendelbewegung der Drahtelektrode korreliert werden. Damit kann der Lichtbogen quasi als Sensor für die Lage der Drahtelektrode bezüglich der Wandung verwendet werden. So verändern sich an definierten Pendelpositionen, beispielsweise wenn die Drahtelektrode besonders nah an der Wandung ist, der Stromverlauf und/oder der Spannungsverlauf signifikant. Es kann dann ein Soll/Ist-Vergleich vorgenommen werden und gegebenenfalls eine Korrektur des Abstands der Drahtelektrode zu der Wandung durchgeführt werden.

Es ist ebenfalls möglich, das metallische Substrat auf der Wandung einer Fuge, Nut oder Bohrung abzuscheiden.

Erfindungsgemäß kann das metallische Substrat auch auf einer Nut in einem Gehäusebauteil einer Gasturbine abgeschieden werden.

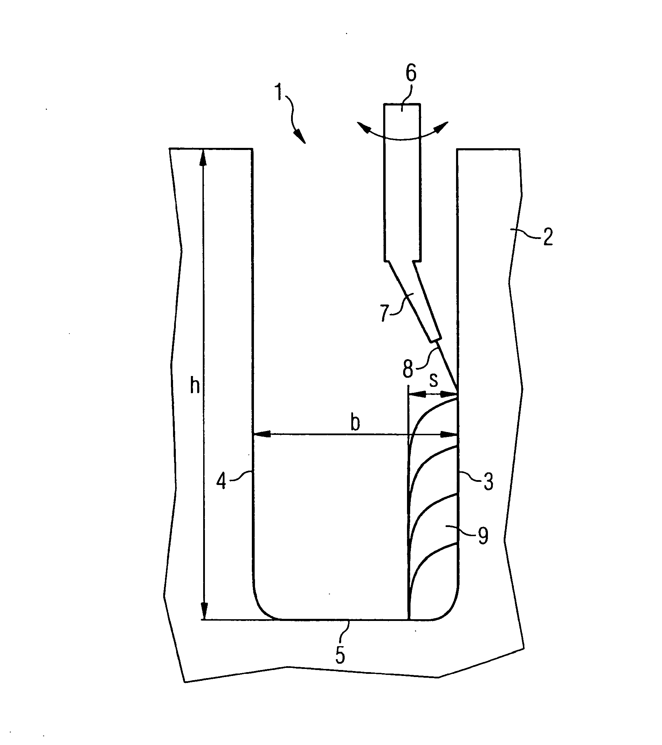

Die Erfindung wird im Folgenden anhand eines Ausführungsbeispiels unter Bezugnahme auf die Zeichnung näher erläutert.

In der Zeichnung zeigt die einzige Figur eine schematische Darstellung einer schmalen Vertiefung in einem Bauteil während der Durchführung des erfindungsgemäßen Verfahrens.

In der Figur ist eine schmale Vertiefung 1 in einem metallischen Bauteil 2 dargestellt. Bei der schmalen Vertiefung 1 kann es sich beispielsweise um eine Nut an einem Gehäusebauteil einer Gasturbine handeln.

Die Vertiefung 1 wird von zwei seitlichen Wandungen 3, 4 und einer Bodenwandung 5 definiert. Sie weist eine Breite b und eine Tiefe h auf, wobei deren Verhältnis so ist, dass ein Einsatz gewöhnlicher Schweißtechniken zur Abscheidung eines metallischen Substrats auf einer der Wandungen 3, 4, 5 nicht möglich ist.

In der Vertiefung 1 ist ein Schweißkopf 6 angeordnet, der eine Führung 7 aufweist, um eine durch den Schweißkopf 6 in die Vertiefung 1 eingeführte Drahtelektrode 8 in Richtung der seitlichen Wandung 3 zu biegen. Ein geeigneter Schweißkopf ist beispielsweise in der DE 32 20 242 C2 beschrieben. Die Drahtelektrode besteht hier aus einem thermisch, chemisch und/oder mechanisch hoch belastbarem Material.

Um mit Hilfe des erfindungsgemäßen Verfahrens einen Verschleißschutz auf der seitlichen Wandung 3 aufzubringen, wird die Drahtelektrode 8 durch den Schweißkopf 6 und die Führung 7 in die Vertiefung 1 eingeführt, bis das Ende der Drahtelektrode 8 in geeignetem Abstand zu der seitlichen Wandung 3 angeordnet ist. Dann wird an das metallische Bauteil 2 und die Drahtelektrode 8 eine derartige Spannung angelegt, dass zwischen der seitlichen Wandung 3 und der Drahtelektrode 8 ein Lichtbogen gezündet wird. Der Lichtbogen ist in der Zeichnung nicht dargestellt, wird aber von der Drahtelektrode 8 getragen, so dass diese bereichsweise schmilzt. Das geschmolzene Material der Drahtelektrode 8 wird auf der seitlichen Wandung 3 als metallisches Substrat 9 abgeschieden.

Während des Abscheidungsvorgangs kann der Schweißkopf 6 eine Pendelbewegung von der seitlichen Wandung 3 weg und zu dieser hin ausführen, wie dies durch den Pfeil in der Zeichnung dargestellt ist. Infolge dieser Pendelbewegung wird das metallische Substrat 9 auf der seitlichen Wandung 3 in der Form einer gependelten Raupe abgeschieden. Alternativ kann das metallische Substrat 9 in mehreren Lagen übereinander oder auch als ungependelte Raupe auf der seitlichen Wandung 3 abgeschieden werden. Während des Abscheidens wird die bereichsweise schmilzende Drahtelektrode 8 nachgeführt.

Um die Lage der Drahtelektrode 8 bezüglich der seitlichen Wandung 3 beim Abscheidungsprozess zu überprüfen und sie gegebenenfalls zu korrigieren, kann der während der Erzeugung des Lichtbogens auftretende Stromverlauf und/oder Spannungsverlauf mit der Pendelbewegung der Drahtelektrode 8 korreliert werden. So treten je nach Abstand zwischen der Drahtelektrode 8 und der seitlichen Wandung 3 unterschiedliche Strom- oder Spannungsverläufe auf, aus denen durch einen Ist/Soll-Vergleich Rückschlüsse auf die Position der Drahtelektrode 8 relativ zu der seitlichen Wandung 3 gezogen werden können. Wenn hier Abweichungen von einem vorgegebenen Pfad festgestellt werden, kann die Position der Drahtelektrode 8 bzw. des Schweißkopfes 6 angepasst werden.

Eine Oxidation der metallischen Komponenten in der Vertiefung 1 kann verhindert werden, indem diese mit einem Schutzgas gefüllt werden.

Es ist ebenfalls möglich, alternativ eine Drahtelektrode 8 aus einem Metall zu verwenden, das zu dem Metall des Bauteils 2 artähnlich oder identisch ist. Dies ist insbesondere dann vorteilhaft, wenn Beschädigungen der seitlichen Wandung 3 repariert werden sollen.

Vorteil des erfindungsgemäßen Verfahrens ist, dass auf der Wandung 3 der schmalen Vertiefung 1 das metallische Substrat 9 abgeschieden werden kann. Auf diese Weise ist ein Plattieren mit einem Verschleißschutz ebenso wie die Reparatur der Wandung 3 auf einfache Weise möglich.

## Patentansprüche

1. Verfahren zum Abscheiden eines metallischen Substrats (9) auf einer Wandung einer schmalen Vertiefung (1) eines metallischen Bauteils als Verschleißschutz,
wobei
eine Drahtelektrode (8) in die Vertiefung (1) eingeführt und dabei mittels einer Führung in Richtung der Wandung gebogen wird, und
dass an das Bauteil und an die Drahtelektrode (8) eine geeignete Spannung angelegt wird, um einen Lichtbogen zu erzeugen, der die Drahtelektrode (8) bereichsweise schmilzt,
wobei das geschmolzene Material der Drahtelektrode (8) auf der Wandung (3) des Bauteils abgeschieden wird, und dass die Drahtelektrode (8) während des Abscheidens des metallischen Substrats (9) nachgeführt wird **dadurch gekennzeichnet, dass** die Breite (b) der Vertiefung (1) größer ist als die Breite (S) des erzeugten Substrats (9) auf der Wandung (3) und
eine schmalere Vertiefung (1) mit der Breite (b - s) durch Abscheiden des Substrats (9) erzeugt wird.

2. Verfahren nach Anspruch 1,
**dadurch gekennzeichnet, dass**
zumindest die Drahtelektrode (8) im Lichtbogen mit einem Schutzgas umgeben wird.

3. Verfahren nach einem der vorhergehenden Ansprüche,
**dadurch gekennzeichnet, dass**
eine Drahtelektrode (8) verwendet wird, die aus demselben oder aus einem artähnlichen Metall wie das Bauteil besteht.

4. Verfahren nach einem der Ansprüche 1 oder 2,
**dadurch gekennzeichnet, dass**
eine Drahtelektrode (8) aus einem thermisch, chemisch und/oder mechanisch hoch belastbarem Metall verwendet wird.

5. Verfahren nach einem der vorhergehenden Ansprüche,
**dadurch gekennzeichnet, dass**
ein Massivdraht oder ein Röhrchendraht als Drahtelektrode (8) verwendet wird.

6. Verfahren nach einem der vorhergehenden Ansprüche,
**dadurch gekennzeichnet, dass**
die Drahtelektrode (8) während des Abscheidens des metallischen Substrats (9) in einer Pendelbewegung von der Wandung (3) weg und zu dieser hin bewegt wird.

7. Verfahren nach Anspruch 6,
**dadurch gekennzeichnet, dass**
der während der Erzeugung des Lichtbogens auftretende Stromverlauf und/oder Spannungsverlauf mit der Pendelbewegung der Drahtelektrode (8) korreliert wird, um so die Lage der Drahtelektrode (8) bezüglich der Wandung (3) zu überprüfen und sie gegebenenfalls zu korrigieren.

8. Verfahren nach einem der vorhergehenden Ansprüche,
**dadurch gekennzeichnet, dass**
metallische Substrat auf der Wandung (3) einer Fuge, Nut oder Bohrung abgeschieden wird.

9. Verfahren nach Anspruch 8,
**dadurch gekennzeichnet, dass**
das metallische Substrat (9) auf einer Nut in einem Gehäusebauteil einer Gasturbine abgeschieden wird.

## Claims

1. Method for depositing a metallic substrate (9) on a wall of a narrow depression (1) of a metallic component as wear protection, a wire electrode (8) being introduced into the depression (1) and thereby bent in the direction of the wall by means of a guide, and a suitable voltage being applied to the component and to the wire electrode (8) in order to create an arc, which melts the wire electrode (8) in certain regions, the molten material of the wire electrode (8) being deposited on the wall (3) of the component, and the wire electrode (8) being progressively fed in during the depositing of the metallic substrate (9), **characterized in that** the width (b) of the depression (1) is greater than the width (S) of the substrate (9) created on the wall (3) and a narrower depression (1) with the width (b-s) is produced by depositing the substrate (9).

2. Method according to Claim 1, **characterized in that** at least the wire electrode (8) in the arc is surrounded by a shielding gas.

3. Method according to one of the preceding claims, **characterized in that** a wire electrode (8) that consists of the same metal as the component or a metal of a similar type is used.

4. Method according to either of Claims 1 and 2, **characterized in that** a wire electrode (8) of a metal that can withstand high thermal, chemical and/or mechanical loads is used.

5. Method according to one of the preceding claims, **characterized in** at a solid wire or a tubular wire is used as the wire electrode (8).

6. Method according to one of the preceding claims, **characterized in that** the wire electrode (8) is moved away from the wall (3) and toward it in an oscillating motion during the depositing of the metallic substrate (9).

7. Method according to Claim 6, **characterized in that** the current variation and/or voltage variation occurring during the creation of the arc is correlated with the oscillating motion of the wire electrode (8), in order in this way to check the position of the wire electrode (8) with respect to the wall (3) and correct it if need be.

8. Method according to one of the preceding claims, **characterized in that** metallic substrate is deposited on the wall (3) of a gap, groove or bore.

9. Method according to Claim 8, **characterized in that** the metallic substrate (9) is deposited on a groove in a casing component of a gas turbine.

## Revendications

1. Procédé de dépôt d'un substrat ( 9 ) métallique sur une paroi d'une cavité ( 11 ) étroite d'un élément métallique en tant que protection vis à vis de l'usure,
dans lequel
on introduit électrode ( 8 ) sous forme de fil dans la cavité ( 1 ) et on la courbe en direction de la paroi au moyen d'un guidage, et
en ce que l'on applique à l'élément et à l'électrode ( 8 ) sous forme de fil une tension appropriée pour produire un arc électrique qui fait fondre par endroit l'électrode ( 8 ) sous forme de fil,
dans lequel on dépose la matière fondue de l'électrode ( 8 ) sous forme de fil sur la paroi ( 3 ) de l'élément et en ce que l'on suit l'électrode ( 8 ) sous forme de fil pendant le dépôt du substrat ( 9 ) métallique, **caractérisé en ce que** la largeur ( b ) de la cavité ( 1 ) est plus grande que la largeur ( S ) du substrat ( 9 ) produit sur la paroi ( 3 ), et
on produit une cavité ( 1 ) plus étroite ayant la largeur ( b-s ) par dépôt du substrat ( 9 ).

2. Procédé suivant la revendication 1,
**caractérisé en ce que**
l'on entoure au moins l'électrode ( 8 ) sous forme de fil dans l'arc électrique d'un gaz de protection.

3. Procédé suivant l'une des revendications précédentes,
**caractérisé en ce que**
l'on utilise une électrode ( 8 ) sous forme de fil, qui est constituée en le même métal ou en un métal de même type que l'élément.

4. Procédé suivant l'une des revendications 1 ou 2,
**caractérisé en ce que**
l'on utilise une électrode ( 8 ) sous forme de fil en un métal pouvant subir une grande sollicitation thermique, chimique et/ou mécanique.

5. Procédé suivant l'une des revendications précédentes,
**caractérisé en ce que**
l'on utilise un fil plein ou un fil en forme de petit tube comme électrode ( 8 ) sous forme de fil.

6. Procédé suivant l'une des revendications précédentes,
**caractérisé en ce que**
l'on éloigne et l'on rapproche de la paroi ( 3 ), suivant un mouvement en aller et retour, l'électrode ( 8 ) sous forme de fil pendant le dépôt du substrat ( 9 ) métallique.

7. Procédé suivant la revendication 6,
**caractérisé en ce que**
l'on met la courbe de courant et/ou la courbe de tension, se produisant pendant la production de l'arc électrique, en corrélation avec le mouvement d'aller et retour de l'électrode ( 8 ) sous forme de fil, pour ainsi contrôler la position de l'électrode ( 8 ) sous forme de fil par rapport à la paroi ( 3 ) et le cas échéant la corriger.

8. Procédé suivant l'une des revendications précédentes,
**caractérisé en ce que**
l'on dépose du substrat métallique sur la paroi ( 3 ) d'une jointure, d'une rainure ou d'un trou.

9. Procédé suivant la revendication 8,
**caractérisé en ce que**
l'on dépose le substrat ( 9 ) métallique sur une rainure dans un élément de carter d'une turbine à gaz.
